# EUROPÄISCHE PATENTSCHRIFT

(11) **EP 3 336 400 B1**
(45) Veröffentlichungstag und Bekanntmachung des Hinweises auf die Patenterteilung: **23.09.2020**
(21) Anmeldenummer: 16020504.3
(22) Anmeldetag: 19.12.2016
(51) Int. Cl.: F16L 5/08, F16L 5/14, H02G 3/22

(54) **LEITUNGSDURCHFÜHRUNG MIT ELASTOMERKÖRPER**
LEAD FEEDTHROUGH WITH ELASTOMER BODY
PASSAGE DE CONDUITE DOTÉ D'UN CORPS ÉLASTOMÈRE

(43) Veröffentlichungstag der Anmeldung: 20.06.2018
(73) Patentinhaber: Hauff-Technik GmbH & Co. KG, 89568 Hermaringen (DE)
(72) Erfinder: Senol, Egritepe, 89520 Heidenheim (DE)
(74) Vertreter: König Szynka Tilmann von Renesse Patentanwälte Partnerschaft mbB

(56) Entgegenhaltungen:
- EP-A1- 1 843 071
- EP-A1- 2 270 376
- EP-A1- 2 937 493
- WO-A1-2010/090587
- DE-U1-202011 107 415
- GB-A- 1 021 457

## Beschreibung

Die vorliegende Erfindung betrifft eine Leitungsdurchführung mit einem Elastomerkörper zum Aufbauen eines dichtenden Verschlusses einer von einer Leitung durchsetzten Wand- oder Bodenöffnung.

Bei aus dem Stand der Technik bekannten Leitungsdurchführungen wird ein Elastomerkörper mit einer Spannvorrichtung verformt und legt sich dabei dichtend an, sowohl an die Leitung als auch an bspw. die Laibung einer Kernbohrung. Die Spannvorrichtung kann den Elastomerkörper dabei in Leitungsrichtung oder auch quer dazu verformen, was die vorliegende Erfindung jedoch ebenso wenig einschränken soll wie bspw. die spezifische Ausgestaltung des dichtenden Übergangs zur Wand hin. Vielmehr ist vorliegend der Elastomerkörper von Interesse.

In der Praxis sind nicht nur verschiedene Leitungstypen, sondern vor allem auch unterschiedliche Leitungsquerschnitte abzudichten. Da sich trotz der Verformung des Elastomerkörpers beim Verspannen nicht beliebig große Distanzen überbrücken lassen, jedenfalls nicht mit einer dann noch zufriedenstellenden Dichtwirkung, muss eine die Leitung aufnehmende Durchgangsöffnung des Elastomerkörpers an den Leitungsquerschnitt angepasst sein. Damit der Monteur auf der Baustelle nicht eine Vielzahl unterschiedlicher Leitungsdurchführungen vorhalten muss, ist bspw. aus der EP 1 843 071 A1 ein Elastomerkörper bekannt, in dessen Durchgangsöffnung eine Folge mehrerer über Materialbrücken zusammenhängender Schalen angeordnet ist. Von den Materialbrücken abgesehen sind die Schalen über als umlaufende Schnitte eingebrachte Trennfugen voneinander getrennt. Durch Auftrennen einer der Materialbrücken kann bzw. können die innerhalb davon angeordneten Schalen abgetrennt und zur Anpassung an einen größeren Leitungsdurchmesser aus der Durchgangsöffnung genommen werden.

Aus der WO 2010/090587 A1 ist ein Durchführungsmodul bekannt, das mit einer Schalenfolge zur Anpassung an unterschiedliche Leitungsdurchmesser versehen ist. Die Schalen hängen über Verbindungsstellen aneinander, wobei diese Verbindungsstellen bei einigen Ausführungsformen abwechselnd an den beiden Stirnseiten angeordnet sind.

Die EP 2 937 493 A1 betrifft eine Durchführung, die in eine Wand eingegossen wird. Vor dem Eingießen wird die Durchführung dabei mit einem Rohrelement zusammengesetzt, wobei die Durchführung zur Anpassung an unterschiedliche Rohrdurchmesser mit einer Schalenfolge ausgestattet ist.

Aus der GB 1 021 457 A ist ein Dichtkörper mit einer Schalenfolge zur Anpassung an unterschiedliche Leitungsdurchmesser bekannt. Dabei erstrecken sich die Trennfugen zwischen den Schalen abwechselnd von beiden Stirnseiten des Elastomerkörpers in diesen hinein.

Der vorliegenden Erfindung liegt die Aufgabe zugrunde, eine vorteilhafte Ausgestaltung eines an unterschiedliche Leitungsdurchmesser anpassbaren Elastomerkörpers anzugeben.

Erfindungsgemäß wird diese Aufgabe mit den Merkmalen gemäß Anspruch 1 gelöst. Bei mindestens einer der Schalen erstrecken sich also die Trennfugen, welche diese Schale von der innenliegend nächstbenachbarten und der außenliegend nächstbenachbarten Schale trennen, von einander entgegengesetzten Stirnseiten des Elastomerkörpers in diesen hinein. Entsprechend sind also auch die Materialbrücken, über welche die Schale mit der innenliegend und der außenliegend nächstbenachbarten Schale jeweils verbunden ist, an den einander entgegengesetzten Stirnseiten des Elastomerkörpers angeordnet. Im Unterschied dazu erstrecken sich bei dem Elastomerkörper gemäß EP 1 843 071 A1 sämtliche Trennfugen der Schalenfolge von derselben Stirnseite ausgehend in den Elastomerkörper und sind entsprechend sämtliche Materialbrücken an der entgegengesetzten Stirnseite angeordnet. Dies mag zwar herstellungstechnisch Vorteile bieten, weil sich bspw. mechanische Schnitte als Trennfugen mit im Vergleich geringerem Aufwand von derselben Stirnseite des Elastomerkörpers einschneiden lassen (der Elastomerkörper muss nur von einer Stirnseite her bearbeitet werden und kann bspw. auf einem einfachen Drehteller aufliegen). Andererseits ermöglicht aber der vorliegende Aufbau, bei dem an beiden Stirnseiten Materialbrücken angeordnet sind, vorzugsweise über die gesamte Schalenfolge immer abwechselnd an der einen und der anderen Stirnseite, einen weitgehend symmetrischen Aufbau.

Der Erfinder hat festgestellt, dass dies beim Anpressen des Elastomerkörpers an die Leitung Vorteile bieten kann, und zwar konkret im Falle einer Leitung kleineren Durchmessers, wenn also noch eine entsprechend große Zahl bzw. sämtliche Schalen in der Durchgangsöffnung angeordnet sind. Mit den beidseitig angeordneten Materialbrücken lässt sich hierbei eine relativ gleichmäßige Verpressung erreichen, wohingegen den Schalen gemäß EP 1 843 071 A1 mit sämtlichen Materialbrücken auf derselben Stirnseite eine Vorzugsrichtung vorgegeben wird. Bildlich gesprochen "ziehen" die Materialbrücken die Schalen dann zu der einen Stirnseite hin, was insbesondere bei großen Verformungen eine deutliche Asymmetrie ergibt. Schlimmstenfalls kann dies bspw. auch eine Beschädigung der Leitung bzw. eine Undichtigkeit zur Folge haben. Umgekehrt kann der vorliegende Aufbau, bei dem die Materialbrücken die Schalen sowohl zu der einen als auch zur entgegengesetzten Stirnseite hin "ziehen", vorteilhafterweise ein relativ gleichmäßiges Anpressen des Elastomerkörpers an die Leitung ermöglichen.

Sofern in der vorliegenden Offenbarung Angaben zur Anordnung der Leitung in dem Elastomerkörper und/oder der Leitungsdurchführung in der Wand- oder Bodenöffnung Bezug genommen wird, soll dies im Allgemeinen nicht implizieren, dass zur Erfüllung des Gegenstands auch tatsächlich eine Leitung hindurch geführt bzw. die Leitungsdurchführung in der Öffnung platziert sein muss. Es wird im Allgemeinen eine objektive Eignung der Leitungsdurchführung beschrieben, wenngleich die Offenbarung aber zugleich ausdrücklich auch hinsichtlich Verwendungs- und Verfahrensaspekten zu lesen ist.

Bezogen auf einen Umlauf um die Mittenachse der Elastomerkörper-Durchgangsöffnung ist bzw. sind die Materialbrücke(n) im Allgemeinen jeweils nicht zwingend vollständig umlaufend ausgebildet. In anderen Worten kann sich also die jeweilige Trennfuge in gewissen Winkelbereichen des Umlaufs auch vollständig durch den Elastomerkörper erstrecken, kann die Materialbrücke also bildlich gesprochen auch perforiert sein. Mit der Materialbrücke zwischen zwei zueinander nächstbenachbarten Schalen verbleibt zumindest eine gewisse Verbindung aus demselben, durchgehenden Elastomermaterial. In anderen Worten sind die Schalen und die Materialbrücke dazwischen monolithisch miteinander, befindet sich dazwischen also keine Materialgrenze (zwischen unterschiedlichen Materialien bzw. Materialien unterschiedlicher Herstellungsgeschichte).

Bevorzugt ist bzw. sind die Materialbrücken in Umlaufrichtung jeweils durchgehend ausgebildet, gegebenenfalls von einem oder mehreren den Elastomerkörper und die Schalenfolge durchsetzenden Schlitzen abgesehen, die ein Aufklappen bzw. Auseinandernehmen des Elastomerkörpers und damit eine nachträgliche Montage auf einer bereits zuvor verlegten Leitung ermöglichen (eine Montage ohne Hindurchfädeln der Leitung). Ein etwaiger solcher Schlitz hat eine axiale Erstreckung und durchsetzt quer bzw. gewinkelt zur Mittenachse die Schalenfolge, bevorzugt liegt er in einer die Mittenachse der Elastomerkörper-Durchgangsöffnung beinhaltenden Ebene. Der Elastomerkörper kann von solchen Schlitzen in mehrere Teile unterteilt, bspw. zweigeteilt sein. Andererseits kann aber auch bevorzugt sein, dass der Elastomerkörper trotz des ein Aufklappen ermöglichenden Schlitzes insgesamt noch zusammenhängt, und das Elastomermaterial selbst gewissermaßen ein Gelenk für das Aufklappen bildet. Zur Illustration wird auch auf die EP 1 843 071 A1 verwiesen. Sofern im Rahmen der vorliegenden Offenbarung auf eine Ausgestaltung "zusammenhängend aus demselben Elastomermaterial" bzw. "monolithisch" oder "durchgehend" Bezug genommen wird, bleibt bzw. bleiben hierbei ohne ausdrücklich gegenteilige Angabe solche der Aufklappbarkeit des Elastomerkörpers dienende Schlitze außer Betracht.

Generell ist die Elastomerkörper-Durchgangsöffnung zu der Mittenachse bevorzugt drehsymmetrisch, besonders bevorzugt rotationssymmetrisch. Generell ist die "Elastomerkörper-Durchgangsöffnung" (auch nur "Durchgangsöffnung") zum Anordnen der Leitung vorgesehen und entsprechend jedenfalls beim Anordnen der Leitung geöffnet - im Ursprungszustand, vor dem Hindurchführen der Leitung, kann sie bspw. mit einem Blindverschluss verschlossen sein, was sogar bevorzugt ist. Ein solcher Blindverschluss ist weiter bevorzugt aus dem gleichen Elastomermaterial wie die Schalenfolge (die Mehrzahl Schalen) vorgesehen, besonders bevorzugt ist er über eine Blindverschluss-Materialbrücke monolithisch damit ausgebildet. Die Blindverschluss-Materialbrücke verbindet die radial innerste der Schalen mit dem Blindverschluss und ist bevorzugt an einer der Stirnseiten angeordnet.

Generell sind "ein"/"eine" im Rahmen dieser Offenbarung ohne gegenteilige Angabe als unbestimmte Artikel zu lesen, kann der Elastomerkörper also bspw. selbstverständlich auch mehrere Durchgangsöffnungen aufweisen und entsprechend zum Hindurchführen mehrerer Leitungen ausgelegt sein. Der Elastomerkörper kann also einerseits genau eine Durchgangsöffnung aufweisen, andererseits aber bspw. auch mindestens zwei oder drei, wobei (davon unabhängig) z. B. nicht mehr als 30, 20, 10 bzw. 5 Durchgangsöffnungen bevorzugte Obergrenzen sein können. Auch insoweit wird zur Illustration auf die EP 1 843 071 A1 verwiesen, die in einem Ausführungsbeispiel einen Elastomerkörper mit genau einer Durchgangsöffnung zeigt und in einem anderen Ausführungsbeispiel einen Elastomerkörper mit drei Durchgangsöffnungen veranschaulicht.

Weitere bevorzugte Ausgestaltungen finden sich in den abhängigen Ansprüchen und der nachstehenden Beschreibung, wobei in der Darstellung nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen.

Wie bereits erwähnt, sind die Materialbrücken in bevorzugter Ausgestaltung über die gesamte Schalenfolge hinweg von Schale zu Schale alternierend auf der einen und der anderen Stirnseite des Elastomerkörpers angeordnet. Es ist also die Materialbrücke zwischen der radial innersten und der dazu außenliegend nächstbenachbarten Schale auf der einen Stirnseite angeordnet und liegt die darauffolgende Materialbrücke (zwischen der letztgenannten Schale und der dazu außenliegend nächstbenachbarten Schale) an der entgegengesetzten Stirnseite usw. In anderen Worten gilt für die Materialbrücken zwischen den Schalen, dass sämtliche in einer Richtung von der Mittenachse weg paarweise zueinander nächstbenachbarten Materialbrücken je Paar an den einander entgegengesetzten Stirnseiten angeordnet sind. Weiter bevorzugt gilt dies auch unter Berücksichtigung einer gegebenenfalls vorgesehenen Blindverschluss-Materialbrücke und/oder einer die Schalenfolge mit dem übrigen Elastomerkörper verbindenden Materialbrücke.

Generell beziehen sich Angaben wie "innerste" bzw. "innenliegend" und "äußerste" bzw. "außenliegend" auf die Mittenachse (je näher dazu, desto weiter innen, und umgekehrt). Auf der Mittenachse senkrecht stehend nach außen weisen die radialen Richtungen, die aber nicht zwingend eine kreisförmige Geometrie implizieren müssen. Die Durchgangsöffnung kann im Allgemeinen bspw. auch eine ovale oder sogar polygonale/rechteckige Form haben, wobei die Bezugnahme auf einen "Durchmesser" dann als Mittelwert aus kleinster und größter Erstreckung in einer zur Mittenachse senkrechten Ebene zu lesen ist (Radius entsprechend als halber Mittelwert). Bevorzugt ist gleichwohl eine Durchgangsöffnung mit kreisförmigem Querschnitt bzw. eine entsprechende Leitung.

Auch unabhängig von der Form der Durchgangsöffnung kann der Elastomerkörper in seiner Außenform an unterschiedliche Wand- oder Bodenöffnungen angepasst sein. So kann er in einer zur Mittenachse senkrechten Schnittebene betrachtet bspw. eine runde, insbesondere kreisrunde Außenform haben und somit zum Einsetzen in bspw. ein Rohr mit kreisförmigem Querschnitt bzw. eine Kernbohrung ausgelegt sein. Dies ist aber nicht zwingend, es ist auch eine in besagter Schnittebene polygonale, insbesondere rechteckige, insbesondere quadratische, Außenform möglich, je nach Öffnung. Die Öffnung muss der Elastomerkörper auch nicht für sich allein vollständig verschließen, sondern er kann auch modulartig gemeinsam mit weiteren Elastomerkörpern in die Öffnung gesetzt und gemeinsam mit diesen den dichtenden Verschluss herstellen. Das "Aufbauen des dichtenden Verschlusses" meint insoweit, dass die Öffnung in Abwesenheit der Leitungsdurchführung jedenfalls nicht vollständig, also zumindest teilweise geöffnet wäre.

Insbesondere im Falle eines solchen modulartigen Einbaus kann die Spannvorrichtung zum Spannen des Elastomerkörpers bspw. auch als dazu gesondertes Teil vorgesehen sein, das bspw. auch gemeinsam mit dem Elastomerkörper in die Öffnung gesetzt werden und einen Teil des Verschlusses darstellen kann. Andererseits kann aber auch der Elastomerkörper für sich die Öffnung vollständig ausfüllen und kann die Spannvorrichtung dazu ausgelegt sein, den Elastomerkörper axial, also in Richtung der Längsachse, zu stauchen, womit sich dieser in den Richtungen senkrecht dazu dichtend anlegt, nach innen an die Leitung und nach außen an eine die Öffnung begrenzende Laibung. Die Spannvorrichtung weist dazu bevorzugt Presskörper auf, die jeweils an einer der beiden Stirnseiten des Elastomerkörpers angeordnet sind (an jeder Stirnseite mindestens ein Presskörper); weiterhin weist die Spannvorrichtung einen den Elastomerkörper durchsetzenden Spannbolzen auf, über den die Presskörper dahingehend wirkverbunden sind, dass sie durch Anziehen des Spannbolzens axial aufeinander zu bewegt werden können, womit der Elastomerkörper axial gestaucht wird. Bevorzugt liegen die an den Stirnseiten des Elastomerkörpers angeordneten Presskörper jeweils direkt an der jeweiligen Stirnseite an.

Auch generell liegen die Stirnseiten des Elastomerkörpers jeweils zumindest im Bereich der Durchgangsöffnung und Schalenfolge bevorzugt axial frei, werden sie also axial nicht von einem anderen Bestandteil der Leitungsdurchführung verdeckt. Die "Stirnseiten" sind Außenflächen des Elastomerkörpers (in Bezug auf axiale, also zur Mittenachse parallele Richtungen).

Generell kann das Wand- oder Bodenelement selbst die Durchgangsöffnung begrenzen, etwa im Falle der bereits erwähnten Kernbohrung. Andererseits kann auch ein mit dem Wand- oder Bodenelement verbautes, etwa eingegossenes oder auch daran befestigtes Rahmenelement die Wand- oder Bodenöffnung bilden. Ein solches Rahmenelement kann bspw. ein einbetoniertes Futterrohr sein, es ist aber bspw. auch ein nachträglich in/an das zuvor hergestellte Wand- oder Bodenelement ein- bzw. angesetzter, bspw. damit verschraubter oder auch verschweißter, Rahmen möglich.

Bei einer bevorzugten Ausführungsform hat die mindestens eine Schale eine Dicke von höchstens 6 mm, in der Reihenfolge zunehmend bevorzugt höchstens 5 mm, 4 mm, 3 mm bzw. 2,5 mm. Mögliche Untergrenzen können (davon unabhängig) bspw. bei mindestens 1 mm, 1,5 mm bzw. 1,8 mm liegen. Der Erfinder hat festgestellt, dass insbesondere als Schnitte eingebrachte Trennfugen aufgrund des Einbringens von beiden Stirnseiten her enger gestaffelt werden können, was entsprechend dünnere Schalen ermöglicht. Zur Illustration kann bspw. bei einer üblichen Pressdichtung mit von einer einzigen Seite her eingebrachten Schnitten die Schalendicke bei rund 4 mm liegen, wohingegen vorliegend rund 2 mm bevorzugt sein können. Im Falle einer Schale mit variierender Dicke wird ein über den Umlauf und axial gebildeter Mittelwert betrachtet, bevorzugt sind Schalen mit jeweils für sich konstanter Dicke. Unabhängig davon haben bevorzugt sämtliche Schalen der Folge untereinander dieselbe Dicke.

Bei einer bevorzugten Ausführungsform ist jede der Schalen für sich und/oder jede der Trennfugen für sich um die Mittenachse als Symmetrieachse drehsymmetrisch, bevorzugt rotationssymmetrisch. Wie vorstehend angemerkt, bleibt bzw. bleiben hierbei etwaige der Aufklappbarkeit dienende Schlitze außer Betracht, gleiches gilt für eine etwaige Markierung (siehe unten im Detail).

In bevorzugter Ausgestaltung erstreckt sich jede der Trennfugen axial, also in einer zur Mittenachse parallelen Achsrichtung, über mindestens 80 %, weiter und besonders bevorzugt mindestens 90 % bzw. 95 %, der axialen Elastomerkörperlänge (dessen Gesamtlänge in axialer Richtung). Mögliche Obergrenzen können (davon unabhängig) bspw. bei höchstens 99,9 %, 99,5 %, 99 %, 98,5 % bzw. 98 % liegen. Im Falle einer über den Umlauf variierenden Erstreckung wird ein darüber gebildeter Mittelwert betrachtet, bevorzugt hat jede der Trennfugen für sich über den Umlauf eine konstante Erstreckung, besonders bevorzugt haben sämtliche Trennfugen dieselbe Erstreckung (sind sie dabei aber zueinander abwechselnd axial ein Stück weit versetzt). Auch die axial genommene Elastomerkörperlänge ergibt sich im Allgemeinen als über den Elastomerkörper gebildeter Mittelwert, bevorzugt hat er eine konstante Länge. Im Allgemeinen können die Trennfugen auch schräg zur Mittenachse verlaufen und wird in den eben dargelegten Betrachtungen dann nur der axiale Anteil zugrunde gelegt, bevorzugt liegen sie zur Mittenachse parallel.

Generell, auch unabhängig vom eben diskutierten Verhältnis von Trennfugenlänge zu Elastomerkörperlänge, werden sämtliche Schalen der Folge von einer gemeinsamen, zur Mittenachse senkrechten Schnittebene geschnitten. Bevorzugt schneiden jedenfalls sämtliche in einem axial mittleren Bereich des Elastomerkörpers und dabei senkrecht zur Mittenachse liegenden Schnittebenen jeweils sämtliche Schalen der Folge und somit sämtliche Trennfugen dazwischen. Dieser axial mittlere Bereich kann sich bspw. mindestens zwischen 40 % und 60 %, weiter und besonders bevorzugt mindestens zwischen 30 % und 70 % bzw. 20 % und 80 % bzw. 10 % und 90 % der axialen Elastomerkörperlänge erstrecken. Über eine entsprechend axiale Erstreckung ist jede der Schalen ihrer innenliegend nächstbenachbarten Schale über eine Innenmantelfläche zugewandt und/oder ihrer außenliegend nächstbenachbarten Schale über eine Außenmantelfläche zugewandt. Solche Schnittebenen, die sämtliche Schalen der Folge und damit Trennfugen durchsetzen, gibt es jedenfalls nicht in den axial äußeren Bereichen, bspw. nicht von 0 % bis in der Reihenfolge der Nennung zunehmend bevorzugt 0,5 %, 1 %, 1,5 % bzw. 2 % der axialen Elastomerkörperlänge und/oder nicht von in der Reihenfolge der Nennung zunehmend bevorzugt 99,5 %, 99 %, 98,5 % bzw. 98 % bis 100 %.

Gemäss Erfindung dient zumindest eine der Materialbrücken als Scharnier, um welches herum eine innerhalb davon liegende Schale aus der Durchgangsöffnung herausgestülpt werden kann. Es können dabei bspw. auch mehrere innerhalb davon liegende Schalen gemeinsam ausgestülpt werden, bevorzugt lässt sich Schale für Schale derart ausstülpen, dass dann sämtliche Schalen außerhalb des übrigen Elastomerkörpers, auf derselben Seite davon angeordnet sind. Mit dem Ausstülpen lassen sich die Schalen gewissermaßen akkordeonartig entfalten, also aus der Durchgangsöffnung heraus ziehen.

Bei einer bevorzugten Ausführungsform ist bzw. sind zumindest eine bzw. einige der herausstülpbaren Schalen an ihrer Mantelfläche mit einer Markierung versehen. Diese erlaubt dem Monteur eine gewisse Individualisierung der Schalen dahingehend, welche der Schalen für welchen Leitungsdurchmesser abzutrennen ist/sind. Dies kann im Allgemeinen bspw. auch eine Farbmarkierung leisten, bevorzugt ist eine Beschriftung mit Ziffern. Hierin kommt im Übrigen auch ein Vorteil der wechselseitig angeordneten Materialbrücken, die ein akkordeonartiges Ausstülpen ermöglichen, zum Tragen. Es kann nämlich in der Herstellung die Schalenfolge ausgestülpt und können eine bzw. einige oder auch alle der Schalen markiert und kann dann wieder eingestülpt werden. Anschließend kann der Monteur durch Ausstülpen der Schalenfolge und Ablesen der Markierung die für einen bestimmten Leitungsdurchmesser abzutrennende(n) Schale(n) ermitteln. Die Mantelflächen der Schalen bieten hierfür deutlich mehr Platz als bspw. die Stirnseiten, was zumindest Montagefehler reduzieren hilft und bei besonders dünnen Schalen eine Markierung auch überhaupt erst ermöglichen kann. In der Zwischenzeit, also nach der Herstellung und bis zur Montage, ist die Markierung dann zudem im "eingefalteten Zustand" der Schalenfolge gut geschützt, was die Gefahr eines Abreibens bzw. -waschens reduzieren helfen kann. Die Markierung kann bspw. händisch oder auch maschinell aufgebracht, bspw. gestempelt werden.

Bevorzugt ist eine Markierung der Schale(n) an jedenfalls jener Mantelfläche, die bei einer im Gesamten zu einer Seitenfläche hin ausgestülpten Schalenfolge nach außen frei liegt. Generell hat jede der Schalen zwei Mantelflächen, wobei im eingestülpten Zustand bei den paarweise nächstbenachbarten Schalen je Paar die Innenmantelfläche der äußeren Schale der Außenmantelfläche der inneren Schale zugewandt liegt (siehe auch vorne).

Bei einer bevorzugten Ausführungsform ist in zumindest einer der Trennfugen eine Funktionszwischenschicht angeordnet. Diese ist bevorzugt aus einem sich von dem Elastomermaterial der Schichtenfolge zumindest in einem Bestandteil unterscheidenden Material vorgesehen. Im Allgemeinen ist zwar auch eine speziell zum Abdichten ausgelegte Zwischenschicht möglich, bspw. eine Gelschicht bzw. Dichtmasse. Es ist bspw. auch eine unter Wassereinwirkung schwellende und somit den Anpressdruck an die Leitung erhöhende Funktionszwischenschicht denkbar. Bevorzugt dient die Funktionszwischenschicht einem anderen Zweck als der elastischen Verformung. Sie kann bspw. zur elektrischen Abschirmung oder auch Erdung vorgesehen sein, bspw. also Mettaleinlage, insbesondere als Drahtgitter bzw. -netz, ausgebildet sein.

In bevorzugter Ausgestaltung weist die Funktionszwischenschicht ein brandhemmendes Material auf, besonders bevorzugt ein Intumeszenzmaterial. Letzteres dehnt sich unter Hitze- bzw. Feuereinwirkung aus, idealerweise unter einer gewissen Veraschung, was im Brandfall die Wand- oder Bodenöffnung verschließen helfen kann (die Leitung kann bspw. abschmelzen, das expandierende Material verschließt die Öffnung gleichwohl). Die sich alternierend zu den einander entgegengesetzten Stirnseiten hin erstreckenden Trennfugen vereinfachen bzw. verbessern das Anordnen, insbesondere nachträgliche Einbringen, von Funktionszwischenschichten - bei nur von einer Stirnseite ausgehenden Trennfugen würden nachträglich eingeschobene Zwischenschichten bspw. nämlich leicht herausgedrückt bzw. der Aufbau insgesamt sehr asymmetrisch werden.

Unabhängig davon im Einzelnen sind bevorzugt sämtliche der Trennfugen mit jeweils einer Funktionszwischenschicht ausgestattet. Eine jeweilige Funktionszwischenschicht kann in die jeweilige zugeordnete Trennfuge eingeschoben werden, es können aber andererseits auch die Schalen von einem ausgestülpten Zustand ausgehend zusammengefaltet und die Funktionszwischenschicht(en) dabei mit eingefaltet werden. Andererseits ist im Allgemeinen auch eine Herstellung des Elastomerkörpers samt Funktionszwischenschicht(en) in einem formenden Verfahren möglich, bspw. durch Zwei-Komponenten-Spritzguss. Es könnte dann der Elastomerkörper als die eine Komponente und die Funktionszwischenschicht(en) als die andere Komponente spritzgegossen werden (die Trennfugen könnten dabei bereits im Formwerkzeug berücksichtigt sein oder auch nachträglich eingeschnitten werden, vgl. die nachstehenden Anmerkungen).

Die Erfindung betrifft einen Elastomerkörper, dessen Schale(n) aufstülpbar ist/sind (siehe vorne), wobei der Elastomerkörper mit der bzw. den Schalen im ausgestülpten Zustand geformt ist/wird. Ein entsprechendes Formwerkzeug, etwa eine Pressform oder ein Spritzgusswerkzeug, gibt dann also einen Elastomerkörper mit ausgestülpter Schalenfolge frei, die dann in der weiteren Herstellung der Leitungsdurchführung eingestülpt wird. Dies kann bspw. insoweit vorteilhaft sein, als so einerseits eine Herstellung in einem formenden Verfahren möglich ist, was gegenüber dem Einschneiden der Trennfugen bspw. Kostenvorteile bieten kann, insbesondere in der Massenfertigung. Würde man andererseits den Elastomerkörper mit eingestülpter Schalenfolge bzw. einen konventionellen Elastomerkörper mit sich von nur einer Stirnseite hinein erstreckenden Trennfugen spritzgießen, müssten in dem Formwerkzeug Stege die Trennfugen freihalten, weswegen die Trennfugen eine gewisse Mindestdicke haben müssen und die Schalen können nicht beliebig dünn werden (allzu dünne Schalen könnten dann beim Entformen reißen). Durch das Formen im ausgestülpten Zustand sind hingegen auch dünne Schalen möglich. Wie bereits eingangs betont, sollen diese Anmerkungen ausdrücklich auch hinsichtlich der Verfahrenskategorie, insbesondere ein Herstellungsverfahren betreffend, offenbart sein.

Die Erfindung betrifft auch die Herstellung einer vorliegend offenbarten Leitungsdurchführung, es wird ausdrücklich auf die vorstehende Offenbarung verwiesen.

Ferner betrifft die Erfindung auch die Verwendung einer vorliegend offenbarten Leitungsdurchführung zum Aufbauen eines dichtenden Verschlusses einer von einer Leitung durchsetzten Wand- oder Bodenöffnung. Bei der Leitung kann es sich insbesondere um eine Strom-, Gas-, Wasser-, Wärme-, Telekommunikations-, Signal- oder Datenleitung handeln. Die Wand- oder Bodenöffnung kann insbesondere in einer Gebäudewand, Schiffswand oder auch Gehäusewand vorgesehen sein. Die Bodenöffnung kann bspw. in einer Bodenplatte, insbesondere Fundamentplatte, oder auch Zwischendecke eines Gebäudes angeordnet sein.

Ferner betrifft die Erfindung auch eine Verwendung, bei welcher die Schale(n) ausgestülpt wird bzw. werden. Bevorzugt wird im ausgestülpten Zustand eine der Materialbrücken aufgetrennt, vgl. auch die vorstehende Offenbarung im Einzelnen.

Im Folgenden wird die Erfindung anhand eines Ausführungsbeispiels näher erläutert, wobei die einzelnen Merkmale im Rahmen der nebengeordneten Ansprüche auch in anderer Kombinationen erfindungswesentlich sein können und auch weiterhin nicht im Einzelnen zwischen den unterschiedlichen Anspruchskategorien unterschieden wird.

Im Einzelnen zeigt
- Figur 1: eine erfindungsgemäße Leitungsdurchführung in einer geschnittenen Seitenansicht;
- Figur 2: eine Detailansicht des Elastomerkörpers der Leitungsdurchführung gemäß Fig. 1;
- Figur 3: am Beispiel einer Leitungsdurchführung gemäß Fig. 1, wie die Schalen der Folge ausgestülpt werden.

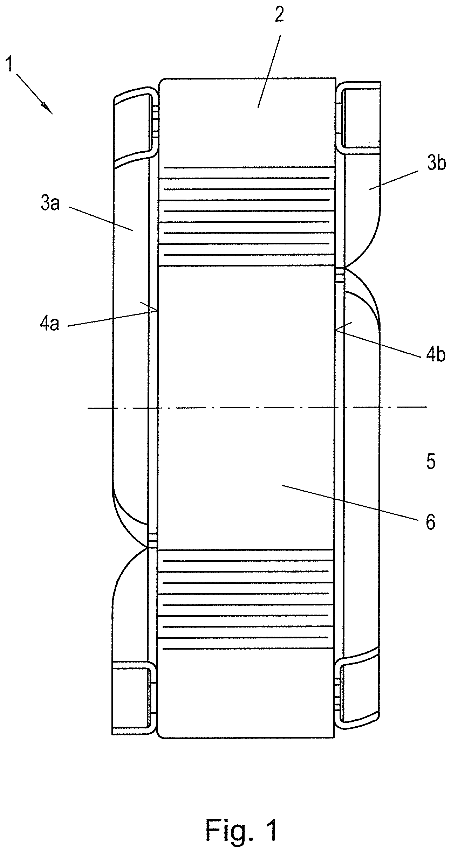

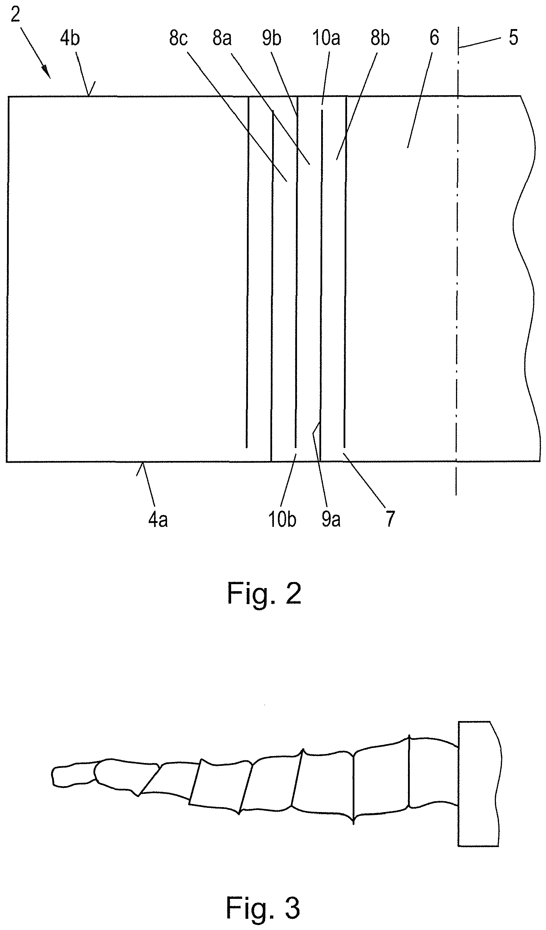

Fig. 1 zeigt eine erfindungsgemäße Leitungsdurchführung 1 in einer geschnittenen Seitenansicht. Fig. 2 zeigt eine Detailansicht dazu, die nachstehenden Anmerkungen beziehen sich auch stets darauf. Die Leitungsdurchführung 1 weist einen Elastomerkörper 2 und als Spanneinrichtung 3 beidseits davon angeordnete Presskörper auf. Die Presskörper sind an einander entgegengesetzten Stirnseiten 4a, b des Elastomerkörpers 2 angeordnet und können durch Anziehen nicht dargestellter Spannbolzen axial, entlang der Mittenachse 5 aufeinander zubewegt werden. Damit wird der Elastomerkörper 2 axial gestaucht und legt sich in den Richtungen senkrecht dazu dichtend an eine Laibung der Öffnung und die hindurchgeführte Leitung an (beides nicht dargestellt). Die Öffnung kann bspw. eine Kernbohrung in einer Wand sein, oder aber bspw. auch von einem einbetonierten Futterrohr begrenzt werden (vgl. auch die Beschreibungseinleitung im Einzelnen).

In der in den Figuren dargestellten Situation ist in der Leitungsdurchführung 1 noch keine Leitung angeordnet, eine zu diesem Zweck im Elastomerkörper 2 vorgesehene Durchgangsöffnung ist noch mit einem Blindverschluss 6 verschlossen, der mit dem übrigen Elastomerkörper über eine Blindverschluss-Materialbrücke 7 monolithisch zusammenhängt (aus demselben Elastomermaterial vorgesehen ist). Die Durchgangsöffnung im Elastomerkörper 2 kann durch Auftrennen der Blindverschluss-Materialbrücke 7 und Herausnehmen des Blindverschlusses 6 geöffnet werden.

Ferner sind zur Anpassung der Durchgangsöffnung an unterschiedliche Leitungsdurchmesser eine Mehrzahl Schalen 8 vorgesehen, die über Trennfugen 9 teilweise voneinander getrennt, dabei aber über verbleibende Materialbrücken 10 insgesamt noch zusammenhängend ausgebildet sind. Betrachtet man bspw. die drei innersten Schalen 8a, b, c, so erstreckt sich zwischen der mittleren Schale 8a und der dazu innenliegend nächstbenachbarten Schale 8b eine erste Trennfuge 9a, die von der ersten Stirnseite 4a des Elastomerkörpers 2 ausgeht, jedoch vor der entgegengesetzten Stirnseite 4b endet, sodass dort eine erste Materialbrücke 10a verbleibt. Auch zwischen der mittleren Schale 8a und der dazu außenliegend nächstbenachbarten Schale 8c erstreckt sich eine Trennfuge 9, diese zweite Trennfuge 9b geht jedoch von der zweiten Stirnseite 4b aus und endet vor der ersten Stirnseite 4a. Entsprechend ist die zweite Materialbrücke 10b an der ersten Stirnseite 4a und damit der ersten Materialbrücke 10a entgegengesetzt angeordnet.

Dies gilt analog für sämtliche Schalen 8 der Folge, von Schale 8 zu Schale 8 sind die Materialbrücken 10 immer abwechselnd an der ersten 4a und der zweiten Stirnseite 4b des Elastomerkörpers 2 angeordnet.

Einen weiteren Vorteil der sich von beiden Stirnseiten 4a, b in den Elastomerkörper 2 hinein erstreckenden Trennfugen 9 illustriert Fig. 3. Es kann nämlich die Schalenfolge ausgestülpt werden, bspw. indem zunächst die innerste Schale 8b zur zweiten Stirnseite 4b hin ausgestülpt und dann einfach durch Ziehen an der innersten Schale 8b die übrigen Schalen aus der Durchgangsöffnung gezogen werden. Dies kann schon generell das Auftrennen einer bestimmten Materialbrücke erleichtern und so Montagefehler reduzieren helfen. Insbesondere können die Schalen an ihren Mantelflächen aber auch mit einer Markierung (Beschriftung) versehen sein, was die Auswahl der für einen bestimmten Leitungsdurchmesser abzutrennenden Schalen erleichtert. Nach dem Abtrennen werden die verbleibenden Schalen wieder eingestülpt und wird die Leitung hindurch geführt.

Ein weiterer Vorteil kann sich ergeben, wenn die Trennfugen 9 zwischen den Schalen 8 zum Anordnen von Funktionszwischenschichten genutzt werden (nicht im Einzelnen dargestellt). Dies können bspw. Funktionszwischenschichten aus einem Intumeszenzmaterial sein, das unter Hitze- bzw. Feuereinwirkung anschwillt und zugleich verascht, was die Wand- bzw. Bodenöffnung auch bei einem Abschmelzen der Leitung verschließen hilft und aufgrund der Veraschung auch eine gewisse thermische Isolation bieten kann.

## Patentansprüche

1. Leitungsdurchführung (1) zum Aufbauen eines dichtenden Verschlusses einer von einer Leitung durchsetzten Wand- oder Bodenöffnung, mit
einem Elastomerkörper (2) zur dichten Anlage an der Leitung, wozu der Elastomerkörper mit einer Spannvorrichtung (3) spannbar und dadurch dicht an die Leitung anpressbar ist,
wobei eine zum Anordnen der Leitung vorgesehene Durchgangsöffnung in dem Elastomerkörper an unterschiedliche Leitungsdurchmesser anpassbar ist, wozu der Elastomerkörper (2) eine Mehrzahl sich jeweils um eine Mittenachse (5) der Durchgangsöffnung umlaufend erstreckender und von der Mittenachse (5) weg nach außen zueinander benachbarter Schalen (8) aufweist, die über Materialbrücken (10) aus demselben Elastomermaterial zusammenhängend, aber zur Durchmesseranpassung herausnehmbar ausgebildet sind,
wobei mindestens eine (8a) der Schalen (8) von ihrer innenliegend nächstbenachbarten Schale (8b) über eine erste Trennfuge (9a) getrennt ist, die sich von einer ersten Stirnseite (4a) des Elastomerkörpers (2) ausgehend in diesen hinein erstreckt und vor einer der ersten Stirnseite (4a) entgegengesetzten zweiten Stirnseite (4b) derart endet, dass dort eine erste (10a) der Materialbrücken (10) angeordnet ist,
wobei die mindestens eine Schale (8a) ferner von ihrer außenliegend nächstbenachbarten Schale (8c) über eine zweite Trennfuge (9b) getrennt ist,
wobei sich die zweite Trennfuge (9b) von der zweiten Stirnseite (4b) des Elastomerkörpers (2) ausgehend in diesen hinein erstreckt und vor der ersten Stirnseite (4a) derart endet, dass dort eine zweite (10b) der Materialbrücken (10) angeordnet ist,
wobei zumindest eine der Materialbrücken (10) als Scharnier dient, um welches eine innerhalb davon liegende Schale aus der Elastomerkörper-Durchgangsöffnung herausgestülpt werden kann, **dadurch gekennzeichnet, dass** der Elastomerkörper (2) ein in einem formenden Verfahren hergestelltes Formteil ist, das mit der herausstülpbaren Schale (8) im ausgestülpten Zustand geformt ist.

2. Leitungsdurchführung (1) nach Anspruch 1, bei welcher über die Mehrzahl Schalen (8) hinweg, von einer innersten (8b) der Schalen (8) zu einer äußersten der Schalen (8), die Materialbrücken (10) von Schale (8) zu Schale (8) abwechselnd an der ersten (4a) und der zweiten Stirnseite (4b) angeordnet sind.

3. Leitungsdurchführung (1) nach Anspruch 1 oder 2, bei welcher die mindestens eine Schale (8a) eine senkrecht zu der Mittenachse (5) der Elastomerkörper-Durchgangsöffnung genommene Dicke von höchstens 6 mm, bevorzugt höchstens 3 mm, hat.

4. Leitungsdurchführung (1) nach einem der vorstehenden Ansprüche, bei welcher die Schalen (8) und/oder die Trennfugen (9) jeweils für sich zu der Mittenachse (5) der Elastomerkörper-Durchgangsöffnung drehsymmetrisch, bevorzugt rotationssymmetrisch sind.

5. Leitungsdurchführung (1) nach einem der vorstehenden Ansprüche, bei welcher sich die Trennfugen (9) axial jeweils über mindestens 80 % der axialen Elastomerkörperlänge erstrecken.

6. Leitungsdurchführung (1) nach einem der vorstehenden Ansprüche, bei welcher die herausstülpbare Schale (8) an einer ihrer Mantelflächen eine Markierung aufweist, die im ausgestülpten Zustand ablesbar ist.

7. Leitungsdurchführung (1) nach einem der vorstehenden Ansprüche, bei welcher in zumindest einer der Trennfugen (9) eine Funktionszwischenschicht angeordnet ist.

8. Leitungsdurchführung (1) nach Anspruch 7, bei welcher die Funktionszwischenschicht ein brandhemmendes Material aufweist, insbesondere ein Intumeszenzmaterial.

9. Verfahren zum Herstellen einer Leitungsdurchführung (1) nach einem der vorstehenden Ansprüche, bei welchem der Elastomerkörper (2) mit der herausstülpbaren Schale (8) im ausgestülpten Zustand geformt wird, also ein entsprechendes Formwerkzeug den Elastomerkörper mit ausgestülpter Schalenfolge freigibt, die dann in der weiteren Herstellung der Leitungsdurchführung eingestülpt wird.

10. Verwendung einer Leitungsdurchführung (1) nach einem der Ansprüche 1 bis 8 zum Aufbauen eines dichtenden Verschlusses einer von einer Leitung, insbesondere einer Strom-, Gas-, Wasser-, Wärme-, Telekommunikations-, Signal-, oder Datenleitung, durchsetzten Wand- oder Bodenöffnung, insbesondere in einer Gebäudewand, Schiffswand oder Gehäusewand.

11. Verwendung nach Anspruch 10, bei welcher die mindestens eine Schale (8), die innerhalb der mindestens einen Materialbrücke (10) liegt, ausgestülpt wird und dann bevorzugt die mindestens eine Materialbrücke (10) aufgetrennt wird.

## Claims

1. A line lead-through (1) for building up a sealing closure of a wall or floor opening intersected by a line, having
an elastomer body (2) for sealingly contacting the line, for what purpose the elastomer body can be tensioned with a tensioning device (3) and pressed against the line thus,
wherein a through-opening provided in the elastomer body for placing the line can be adapted to different line diameters, for what purpose the elastomer body (2) comprises of a plurality of shells (8) respectively extending circumferentially around a centre-axis (5) of the through-opening and arranged adjacent to each other in a direction away from the centre-axis (5) outwards, the shells hanging together via material bridges (10) of the same elastomer material but being removable for the diameter adaption,
wherein at least one (8a) of the shells (8) is separated from a directly adjacent inner shell (8b) by a first parting line (9a) which extends from a first front face (4a) of the elastomer body (2) into the latter and ends ahead of a second front face (4b) opposite to the first front face (4a) in such a way that a first one (10a) of the material bridges (10) is arranged there,
wherein the at least one shell (8a) is further separated from a directly adjacent outer shell (8c) by a second parting line (9b),
wherein the second parting line (9b) extends from the second front face (4b) of the elastomer body (2) into the latter and ends ahead of the first front face (4a) in such a way that a second one (10b) of the material bridges (10) is arranged there,
wherein at least one of the material bridges (10) serves as a hinge around which a shell arranged inwards thereof can be folded out of the elastomer body through-opening,
**characterised in that**
the elastomer body (2) is a moulded part formed by moulding, which is formed with the foldable shell (8) in the folded-out position.

2. The line lead-through (1) according to claim 1, wherein across the shells (8), from an innermost (8b) of the shells (8) to an outermost of the shells (8), the material bridges (10) are arranged alternating from shell (8) to shell (8) at the first (4a) and the second front face (4b).

3. The line lead-through (1) according to claim 1 or 2, wherein the at least one shell (8a) has a thickness taken perpendicularly to the centre-axis (5) of the elastomer body through-opening of 6 mm at maximum, preferably 3 mm at maximum.

4. The line lead-through (1) according to one of the preceding claims, wherein the shells (8) and/or the parting lines (9) are rotationally symmetrical, preferably over the whole circumference.

5. The line lead-through (1) according to one of the preceding claims, wherein the parting lines (9) respectively extend axially over at least 80% of the axial elastomer body length.

6. The line lead-through (1) according to one of the preceding claims, wherein the shell (8) which can be folded out comprises a marking at an outer surface, which can be read off in the folded-out state.

7. The line lead-through (1) according to one of the preceding claims, wherein a functional intermediate layer is arranged in at least one of the parting lines (9).

8. The line lead-through (1) according to claim 7, wherein the functional intermediate layer comprises a fire retardant material, in particular an intumescent material.

9. A method for manufacturing the line lead-through (1) according to one of the preceding claims, wherein the elastomer body (2) is formed with the shell (8) which can be folded out being in the folded-out position, so that a respective moulding tool releases the elastomer body with folded-out shells, which are folded in during the further manufacturing of the line lead-through.

10. The use of a line lead-through (1) according to one of claims 1 to 8 for building up a sealing closure of a wall or floor opening, in particular in a building wall, ship wall or housing wall, intersected by a line, in particular a power, gas, water, heat, telecommunication, signal or data line.

11. The use of claim 10 wherein the at least one shell (8), which is arranged inside of the at least one material bridge (10), is folded out, with the at least one material bridge (10) being preferably separated then.

## Revendications

1. Passage de conduite (1) permettant de réaliser la fermeture hermétique d'une ouverture prèvue dans une paroi ou au sol et traversée d'une conduite, comprenant un corps élastomère (2) destiné à être appliqué de façon hermétique sur ladite conduite, ce pour quoi le corps élastomère peut être serré grâce à un dispositif de serrage (3) pour ainsi pouvoir être comprimé de façon hermétique sur la conduite;
une ouverture de passage, prévue dans le corps élastomère pour y disposer ladite conduite, pouvant s'adapter à divers diamètres de conduite, le corps élastomère (2) présentant à cet effet une pluralité de coques (8) adjacentes entre elles et s'étendant circonférentiellement à un axe médian (5) de l'ouverture de passage, les unes extérieures aux autres par rapport audit axe médian (5), lesdites coques étant conçues solidaires par le biais de ponts de matière (10) du même matériau élastomère tout en étant retirables afin d'assurer l'adaptation aux différents diamètres,
au moins une (8a) des coques (8) étant séparée de la coque (8b) directement adjacente qu'elle contient par le biais d'une première ligne de séparation (9a) qui s'étend à partir d'une première face frontale (4a) du corps élastomère (2) vers l'intérieur de celui-ci et qui se termine avant même d'atteindre une deuxième face frontale (4b) opposée à la première face frontale (4a) de manière à créer un premier (10a) desdits ponts de matière (10),
ladite au moins une coque (8a) étant en outre séparée de la coque adjacente (8c) qui la contient par une deuxième ligne de séparation (9b),
ladite deuxième ligne de séparation (9b) s'étendant à partir de la deuxième face frontale (4b) du corps élastomère (2) vers l'intérieur de celui-ci et se terminant avant même d'atteindre la première face frontale (4a) de manière à créer un deuxième (10b) desdits ponts de matière (10),
au moins un desdits ponts de matière (10) servant de charnière autour de laquelle une coque située en son intérieur peut être amenée à ressortir de l'ouverture de passage du corps élastomère,
**caractérisé en ce que** le corps élastomère (2) consiste en une pièce moulée fabriquée au cours d'un procédé de moulage et qui est moulée en présentant ladite coque (8), pouvant être amenée à ressortir, dans son état ressorti.

2. Passage de conduite (1) selon la revendication 1, dans lequel, sur l'étendue de la pluralité de coques (8), de la plus intérieure (8b) des coques (8) jusqu'à la plus extérieure des coques (8), les ponts de matière (10) sont disposés alternativement, de coque (8) en coque (8), sur la première (4a) et sur la deuxième (4b) face frontale.

3. Passage de conduite (1) selon la revendication 1 ou 2, dans lequel l'au moins une coque (8a) présente une épaisseur, perpendiculairement à l'axe médian (5) de l'ouverture de passage du corps élastomère, faisant au maximum 6 mm, de préférence au maximum 3 mm.

4. Passage de conduite (1) selon l'une des revendications précédentes, dans lequel les coques (8) et/ou les lignes de séparation (9) sont, chacune séparément, symétriques en rotation discrète, et de préférence continue, par rapport à l'axe médian (5) de l'ouverture de passage du corps élastomère.

5. Passage de conduite (1) selon l'une des revendications précédentes, dans lequel les lignes de séparation (9) s'étendent chacune axialement sur au moins 80 % de la longueur axiale du corps élastomère.

6. Passage de conduite (1) selon l'une des revendications précédentes, dans lequel la coque (8) pouvant être amenée à ressortir présente sur une de ses surfaces périphériques, un marquage qui est lisible à l'état ressorti.

7. Passage de conduite (1) selon l'une des revendications précédentes, dans lequel une couche intermédiaire fonctionnelle est agencée dans au moins une des lignes de séparation (9).

8. Passage de conduite (1) selon la revendication 7, dans lequel la couche intermédiaire fonctionnelle présente un matériau retardateur de combustion, notamment un matériau intumescent.

9. Procédé de fabrication d'un passage de conduite (1) selon l'une des revendications précédentes, dans lequel un corps élastomère (2) est moulé en présentant ladite coque (8), pouvant être amenée à ressortir, dans son état ressorti, c'est-à-dire qu'un outil de moulage correspondant libère le corps élastomère présentant la série de coques dans leur état ressorti, lesquelles coques sont ensuite emboîtées au cours de la suite de la fabrication du passage de conduite.

10. Utilisation d'un passage de conduite (1) selon l'une des revendications 1 à 8 afin de réaliser la fermeture hermétique d'une ouverture pratiquée dans une paroi ou au sol et traversée d'une conduite, notamment une conduite électrique ou thermique, de gaz ou d'eau, une ligne de télécommunications, de signaux ou de données, notamment dans une paroi de bâtiment, de navire ou de boîtier.

11. Utilisation selon la revendication 10, dans lequel l'au moins une coque (8) située à l'intérieur de l'au moins un pont de matière (10) est amenée à ressortir, après quoi l'au moins un pont de matière (10) est de préférence défait.
